# EUROPEAN PATENT SPECIFICATION

(11) **EP 3 413 043 B1**
(45) Date of publication and mention of the grant of the patent: **26.03.2025**
(21) Application number: 17747227.1
(22) Date of filing: 20.01.2017
(51) Int. Cl.: G01N 30/00, B01J 20/26, G01N 1/10, G01N 1/22, G01N 30/88, B01D 15/02, B01J 20/28, B01J 20/34

(54) **ELEMENT FOR EXTRACTING ORGANIC COMPONENT**
ELEMENT ZUR EXTRAKTION EINER ORGANISCHEN KOMPONENTE
ÉLÉMENT D'EXTRACTION DE COMPOSANT ORGANIQUE

(30) Priority: 03.02.2016 JP 2016018812
(43) Date of publication of application: 12.12.2018
(73) Proprietor: Gerstel K.K., Tokyo 152-0031 (JP)
(72) Inventor: OCHIAI, Nobuo, Tokyo 152-0031 (JP); SASAMOTO, Kikuo, Tokyo 152-0031 (JP); KANDA, Hirooki, Tokyo 152-0031 (JP)
(74) Representative: Maiwald GmbH
(86) International application number: PCT/JP2017/001876
(87) International publication number: WO 2017/135068

(56) References cited:
- WO-A1-2014/206938
- CN-A- 102 366 721
- US-A1- 2015 279 646
- MARGOUM CHRISTELLE ET AL: "Stir bar sorptive extraction coupled to liquid chromatography-tandem mass spectrometry for the determination of pesticides in water samples: Method validation and measurement uncertainty", TALANTA, vol. 116, 2 May 2013 (2013-05-02), pages 1 - 7, XP028743866, ISSN: 0039-9140, DOI: 10.1016/J.TALANTA.2013.04.066
- C. V. RUMENS ET AL: "Swelling of PDMS networks in solvent vapours; applications for passive RFID wireless sensors", JOURNAL OF MATERIALS CHEMISTRY C, vol. 3, no. 39, 18 August 2015 (2015-08-18), UK, pages 10091 - 10098, XP055615551, ISSN: 2050-7526, DOI: 10.1039/C5TC01927C
- OCHIAI NOBUO ET AL: "Solvent-assisted stir bar sorptive extraction by using swollen polydimethylsiloxane for enhanced recovery of polar solutes in aqueous samples: Application to aroma compounds in beer and pesticides in wine", JOURNAL OF CHROMATOGRAPHY A, ELSEVIER, AMSTERDAM, NL, vol. 1455, 26 May 2016 (2016-05-26), pages 45 - 56, XP029606188, ISSN: 0021-9673, DOI: 10.1016/J.CHROMA.2016.05.085
- MCGOVERN M E ET AL: "ROLE OF SOLVENT ON THE SILANIZATION OF GLASS WITH OCTADECYLTRICHLOROSILANE", LANGMUIR, AMERICAN CHEMICAL SOCIETY, US, vol. 10, 1 January 1994 (1994-01-01), pages 3607 - 3614, XP001006937, ISSN: 0743-7463, DOI: 10.1021/LA00022A038
- YUMIKO ISHII ET AL.: "Determination of Polycyclic Aromatic Hydrocarbons in River Water by HPLC after Stir Bar Sorptive Extraction", JOURNAL OF JAPAN SOCIETY FOR ANALYTICAL CHEMISTRY, vol. 55, no. 12, 2006, pages 949 - 954, XP009513030, ISSN: 0525-1931, DOI: 10.2116/bunsekikagaku.55.949

## Description

### Technical field

The present invention relates to an extraction method using an element for extracting organic components having a hydrocarbon. The present invention also relates to analytical methods using the element.

### Background art

As an extraction and analytical method of trace amount of substance in a fluid using a solid phase, JP2000-298121A describes a method of using an agitating sphere covered with an active layer such as polyethylene glycol, silicone, polyimide,
octadecyltrichlorosilane, polymethylvinylchlorosilane, liquid crystal polyacrylate, graft self-configuring monomolecular layers and inorganic coating material.

In addition, a method for measuring volatile components derived from plants at relatively high sensitivity by injecting ethyl acetate or cyclohexane into an inside of a tube made of polydimethylsiloxane is described in J. Sep. Sci. 2010, 33, 2191-2199.

WO 2014/206938 A1 discloses an organic component extracting element, namely a Twister^{™} stir bar, coated with polydimethylsiloxane (PDMS), which has been treated with a 50:50 solvent mixture of methanol and dichloromethane.

However, in any of the above-mentioned methods, trace amount of organic components cannot be extracted, and therefore the analysis results are not sufficiently sensitive enough to satisfy yet.

### Summary of the invention

### Problem to be solved by the invention

An object of the present invention is to provide organic components extraction methods and organic components analytical methods using the element.

### Means for solve the problem

The inventors of the present invention found that it can incorporate trace amount of organic components by swelling a specific polymer with a specific chlorinated solvent, ether, ketone, alkane, amine and aromatic solvent and the taken organic components can be separated.

That is, the present invention is a method for extracting organic components having a hydrocarbon according to claim 1, with preferred embodiments thereof claimed in claims 2 to 11.

In addition, the present invention is a method for analyzing an organic component having a hydrocarbon, wherein the method comprises performing the method for extracting organic components according to any one of claims 1 to 11.

Further, in the the above-mentioned method, the analysis may be carried out using GC (gas chromatography) or LC (liquid chromatography).

Further, in the above-mentioned method, the GC detector may be selected from the group consisting of MS (mass spectrometer), a FID (a flame ionization detector), an NPD (nitrogen phosphorus detector), an ECD (electron capture type detector), an AED (atomic emission detector), SCD (sulfur chemiluminescent detector), NCD (nitrogen chemiluminescent detector), FPD (flame photometric detector) and PFPD (pulsed flame photometric detector).

In addition, in the above-mentioned method, the LC detector may be selected from the group consisting of MS, IR (differential refractive detector) and UV (ultraviolet detector).

In the present invention, the polymer swelled with at least one solvent selected from dichloromethane, chloroform, diethyl ether, ethyl propyl ether, diisopropyl ether, dipropyl ether, methyl tert-butyl ether, diethyl ketone, methyl propyl ketone, methyl isopropyl ketone, ethyl propyl ketone, methyl isobutyl ketone, pentane, isohexane, hexane, cyclohexane, heptane, isoheptane, isooctane, octane, carbon disulfide, diisopropylamine, trimethylamine, benzene, toluene and xylene, wherein said polymer is at least one selected from the group consisting of polyethyleneglycol, polyorganosiloxane, polyimide, polymethylvinylchlorosilane, and polyacrylate.

in the present invention, the weight ratio of the solvent to the polymer may be 4: 1 to 1: 4.

In addition, in the present invention, a volume increase rate of the polymer after swelling the solvent comparing with before swelling with the solvent may be 120 to 400%.

In addition, in the present invention, the solvent may be selected from the group consisting of dichloromethane, diethyl ether, diisopropyl ether, methyl tert-butyl ether, methyl isobutyl ketone, cyclohexane, hexane and toluene.

In addition, the present invention is the above-mentioned polymer, wherein the polymer is silicone and the silicone is polyorganosiloxane.

In addition, in the present invention, the polyorganosiloxane preferably polydimethylsiloxane.

### Effect of the invention

According to the present invention, a method for extracting organic components having a hydrocarbon and using an element capable of extracting trace amount of organic components can be obtained. Also, using this element, trace organic components can be measured by GC, LC or the like.

Brief explanation of the drawings
FIG. 1 is a diagram showing one embodiment of an organic component extraction element.
FIG. 2 is a diagram showing one embodiment of an organic component extraction element.
FIG 3 is a diagram showing one embodiment of a method for extracting of the present invention.
FIG 4 is a diagram showing one embodiment of a method for extracting of the present invention.
FIG 5 is a diagram showing one embodiment of a method for extracting of the present invention.
FIG. 6 schematically shows a configuration of an analyzer used in the present invention.
FIG. 7 is a view showing Example 1 and Comparative Example 1.
FIG. 8 is a view showing Example 2 and Comparative Example 2.
FIG. 9 is a view showing Example 3 and Comparative Example 3.
FIG. 10 is a view showing Example 4 and Comparative Example 4.
FIG 11 is a view showing Example 12 and Comparative Example 13.

### Embodiment for carrying out the invention

In the present invention, the organic component means a substance having a hydrocarbon. The molecular weight of the organic component to be extracted and analyzed in the present invention is not particularly limited, but it is, for example, 15 dalton or more and 30,000 dalton or less, preferably 15 dalton or more and 2000 dalton or less, more preferably 15 dalton or more and 1000 or more.

Examples of the polymer used in the present invention comprise polyethylene glycol, polyorganosiloxane, polyimide, polymethylvinylchlorosilane and polyacrylate.

Of the above polymers, polyorganosiloxane is more preferable, and polydimethylsiloxane is most preferable.

Examples of the solvent used in the present invention comprise dichloromethane, chloroform, diethyl ether, ethyl propyl ether, diisopropyl ether, dipropyl ether, methyl tert-butyl ether, diethyl ketone, methyl propyl ketone, methyl isopropyl ketone, ethyl propyl ketone, methyl isobutyl ketone , pentane, isohexane, hexane, cyclohexane, heptane, isoheptane, isooctane, octane, carbon disulfide, diisopropylamine, triethylamine, benzene, toluene and xylene, each of which may be used alone or in combination.

Among these solvents, dichloromethane, diethyl ether, diisopropyl ether, methyl tert-butyl ether, methyl isobutyl ketone, cyclohexane, hexane and toluene are preferable, and
dichloromethane, diethyl ether, diisopropyl ether, methyl tert-butyl ether and cyclohexane are most preferable.

The method for swelling the polymer with the solvent is not particularly limited, and organic components extracting element of the present invention can be obtained by immersing the polymer in a solvent. The time for swell depends on the thickness of the polymer, but may be, for example, 10 to 60 minutes, 10 to 120 minutes, and the like.

The weight ratio of the solvent to the polymer is, for example, 4: 1 to 1: 4, preferably 3: 7 to 1: 4, more preferably 1: 2 to 2: 1.

The volume increase rate of the polymer after swell the polymer with the solvent to before swell with the solvent is, for example, 120 to 400%, preferably 150 to 400%, more preferably 150 to 350%.

The element for extracting organic components can be obtained by swell with at least one solvent selected from dichloromethane, chloroform, diethyl ether, ethyl propyl ether, diisopropyl ether, dipropyl ether, methyl tert-butyl ether, diethyl ketone, methyl propyl ketone, methyl isopropyl ketone, ethyl propyl ketone, methyl isobutyl ketone, pentane, isohexane, hexane, cyclohexane, heptane, isoheptane, isooctane, octane, carbon disulfide, diisopropylamine, triethylamine, benzene, toluene and xylene .

The shape of the organic component extracting element used in the present invention is not particularly limited, but examples thereof include a spherical shape, a rod shape, an ellipsoid shape, a disk shape, a flat plate shape, and a tubular shape.

The size of the organic component extracting element used in the present invention is not particularly limited, and in the case of a spherical shape, the average particle size is, for example, 1 to 20 mm, preferably 1 to 10 mm, more preferably 1 to 5 mm.

When the organic component extracting element is in the form of a rod, the diameter thereof is, for example, 1 to 20 mm, preferably 1 to 10 mm, more preferably 1 to 5 mm can be mentioned, and the length is, for example, 10 to 100 mm, preferably 10 to 50 mm, and more preferably 10 to 25 mm.

When the organic component extraction element is in the form of an ellipsoid, the major axis length thereof is, for example, 10 to 100 mm, preferably 10 to 50 mm, more preferably 10 to 25 mm , and the length of the minor axis is, for example, 1 to 40 mm, preferably 5 to 25 mm, more preferably 10 to 20 mm, and the aspect ratio is, for example, 1: 2 to 1:10, preferably 1: 2 to 1: 5, more preferably 1: 2 to 1: 3.

When the element for organic component extraction is in the form of a disc, the diameter thereof is, for example, 5 to 100 mm, preferably 10 to 50 mm, more preferably 10 to 25 mm, and the thickness is, for example, 1 to 20 mm, preferably 1 to 10 mm, more preferably 1 to 5 mm.

When the organic component extracting element is on a flat plate, the length in the longitudinal direction and the transverse direction is, for example, 5 to 100 mm, preferably 10 to 50 mm, more preferably 10 to 25 mm and the thickness thereof is, for example, 0.5 to 10 mm, preferably 1 to 10 mm, and more preferably 1 to 5 mm.

When the organic component extracting element is in the form of a tube, the inner diameter thereof is, for example, 0.5 to 9 mm, preferably 0.5 to 5 mm, more preferably 0.5 to 3 mm, and the outer diameter thereof is, for example, 2 to 12 mm, preferably 2 to 6 mm, more preferably 2 to 3 mm, and the thickness of the tube is, for example, 0.5 to 4 mm, preferably 0.5 to 3 mm, more preferably 0.5 to 2 mm. The length of the tube is, for example, 10 to 50 mm, preferably 10 to 30 mm, more preferably 10 to 20.

Further, as an organic component extracting element, at least one part of the element can be a ferromagnetic substance.

Here, the ferromagnetic material is not particularly limited as long as it has a property of attaching to and detaching from the magnet, for example, iron, cobalt, nickel, gadolinium and the like can be mentioned.

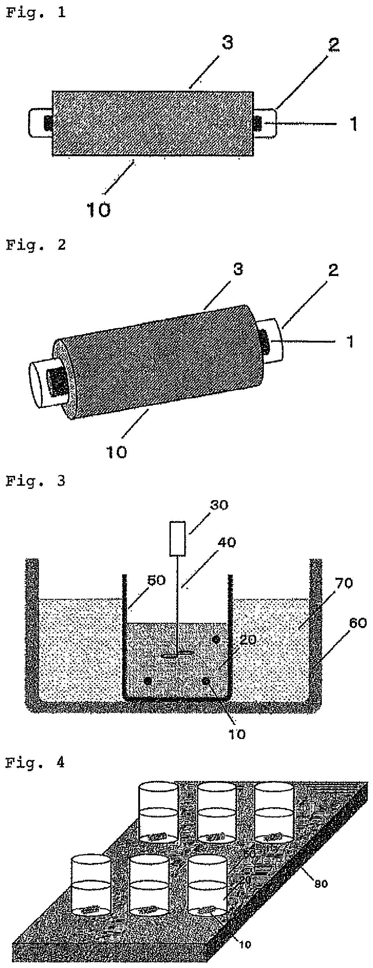

As described in Figs. 1 and 2, it is possible to coat the ferromagnetic material 1 with the glass and / or the plastic 2 as the organic component extracting element 10 and furthermore to coat at least one portion of the glass and / or the plastic can be coated with the polymer 3. As the plastic used here, for example, polytetrafluoroethylene or fluorinated hydrocarbon polymer and the like can be mentioned.

Next, the extraction method of the present invention will be described.

The extraction method of the present invention comprises steps (1) to (4) as defined in claim 1.

Here, in the extracting method of the present invention, explanation will be made on the case where the organic components are extracted from the liquid and the case where are extracted from the gas.

In the case of extracting organic components from a liquid, the liquid to be used is not particularly limited as long as it contains organic components to be extracted, and
examples thereof include water, water / methanol, water / acetone, water / acetonitrile and the like. Among them, water, water / methanol, water / ethanol are preferable, and water / ethanol is more preferable.

FIG. 3 shows one embodiment of the present invention. In FIG. 3, the liquid 20 containing organic components and the spherical organic component extraction elements 10 are placed in the container 50. Thereby, the organic components extracting element 10 and the liquid 20 containing the organic components to be extracted are brought into contact with each other. By leaving as it is, the organic components are incorporated in the organic component extracting element 10. There is no particular limitation on the time to be left as long as the organic components are incorporated in the organic component extracting elements 10, but it is, for example, 5 minutes to 24 hours, 20 minutes to 4 hours, 30 minutes to 2 hours, etc.

For example, as shown in FIG. 3, the stirring rod 40 is rotated by the motor 30 so that the contact between the liquid 20 with the organic component extracting elements 10 is promoted, and the organic component can be incorporated into the organic component extraction element 10 in a shorter time.

By operating the sonicator 60 containing water 70, it becomes possible to more efficiently swell organic components into the organic component extraction elements 10.

In FIG. 3, the organic component extracting elements 10 incorporating the organic components can be taken out by an automatic sampling device (not shown), tweezers or the like. Alternatively, after removing the stirring bar 40, the container 50 is taken out and the liquid 20 containing the organic component extraction elements 10 is filtered, whereby the organic component extracting elements 10 can be taken out.

Next, the organic component extracting elements 10 can be inserted into a desorption device or the like to separate organic components. Alternatively, the extracted organic component extracting elements 10 can be placed in a solvent for back extraction and the organic components can be separated into this back extraction solvent (reverse extraction).

Here, the solvent for the back extraction is not particularly limited as long as it dissolves the organic components, for example, it comprises at least one from the group consisting of acetone, methyl ethyl ketone, acetonitrile, methanol, ethanol, propanol, methyl acetate, ethyl acetate and water.

FIG. 4 shows another embodiment of the present invention. In FIG. 4, as the organic component extracting elements 10, a ferromagnetic material as shown in FIGs. 1 and 2 is coated with glass and one part of the glass is covered with the above polymer is used. In FIG. 4, a plurality of containers 50 containing the liquid 20 and the organic component extracting elements 10 are used, and the liquid 20 containing different organic components can be simultaneously extracted. In addition, by using the liquid 20 containing the same organic components, the number of samples can be increased to improve the measurement accuracy.

In FIG. 4, a plurality of containers 50 are disposed on a magnetic stirrer 80, and by operating the magnetic stirrer 80, the organic component extracting element 10 is rotated. Thus, it is possible to promote the contact between the liquid 20 and the organic component extracting element 10, and take in the organic component into the organic component extracting element 10 in a short time. In addition, in FIG. 4, the temperature of the magnetic stirrer 80 can be controlled, and organic components can be extracted at a certain temperature.

Next, the organic component extracting element 10 having the organic components incorporated therein can be taken out by an automatic sampling device (not shown), tweezers or the like. Alternatively, the organic component extracting element 10 can be taken out by taking out the container 50 and filtering the liquid 20 containing the organic component extracting element 10.

Thereafter, the organic component extracting element 10 can be inserted into a desorption device to separate the organic component. The desorption device used here is not particularly limited as long as it is capable of separating the organic components taken into the organic component extracting element 10. For example, a desorption apparatus that allows a gas such as helium to flow at a constant flow rate, and one that equips a heating device and promotes desorption by heating. Alternatively, the taken out organic component extracting element 10 can be placed in the above-mentioned back extraction (reverse extraction) solvent and the organic components can be separated into the back extraction solvent.

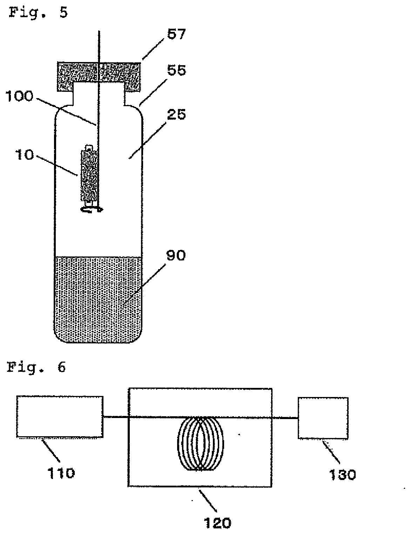

Next, a method of extracting organic components from a gas will be described with reference to FIG. 5. In FIG. 5, the organic component extracting element 10 is hung in a container 55 through a lid 57 on the top of a container 55 by a wire-like carrying device 100. A solid or liquid sample 90 is placed at the bottom of the container 55, and the container 55 is sealed by a lid 57. Organic components evaporated from the solid or the liquid sample 90 is contained in a gas 25 in a head space at the top of the container 55, and the organic component extracting element 10 and the gas containing the organic components to be extracted are brought into contact.

Here, by allowing the organic component extracting element 10 to stand in the container 55 for a certain period of time, the organic components are taken in the organic component extracting element 10. There are no particular restrictions on the time to be left as long as the organic components are incorporated in the organic component extracting element 10, but it is exemplified by 20 minutes to 2 hours, 20 minutes to 4 hours, 5 minutes to 24 hours, etc.

At this time, the head space may be agitated using a stirrer (not shown) such as a propeller. In this case, the organic components can be taken into the organic component extraction element 10 in a shorter time than when the organic component extracting element 10 is left still.

Then, by opening the lid 57 and pulling up the carrying device 100, the organic component extraction element 10 can be taken out. Then, the organic component extracting element 10 can be inserted into the desorption device to separate the organic components. The desorption apparatus used here is not particularly limited as long as it is capable of separating the organic components taken into the organic component extracting element 10. For example, a desorption apparatus that allows a gas such as helium to flow at a constant flow rate, and one that equips a heating device and promotes desorption by heating. Alternatively, the extracted organic component extracting element 10 can be placed in the above-mentioned back extraction solvent and the organic components can be separated into the back extraction solvent.

Next, a method of analyzing the organic component of the present invention will be described with reference to FIG. 6. In FIG. 6, the organic components separated by the above method are brought from the desorption device 110 and introduced into the GC or LC 120. The GC or LC 120 is connected to the detector 130, at which the organic components are measured. In the case of GC as a detector, MS (mass analyzer), FID (a flame ionization detector), NPD (nitrogen phosphorus detector), ECD (electron capture type detector), AED (atomic emission detector), SCD (sulfur chemiluminescent detector), NCD (nitrogen chemiluminescent detector), FPD (flame photometric detector) and PFPD (pulsed flame photometric detector) can be mentioned. In the case of LC, MS, IR (differential refraction detector), UV (ultraviolet ray detector) and the like can be mentioned.

### Examples

Hereinafter, the present invention will be described in more detail with reference to examples, but the present invention is not limited to those described in the examples.

### <Standard Sample of Organic Components>

As a standard sample 1 of organic components, each of 50 ng of 2-acetylthiazole, 2,5-dimethylpyrazine, guaiacol, coumarin, phenethyl alcohol, 1-hexanol, cis-3-hexenol, indole, 6-methyl-5-heptene 2-one, gamma- nonalactone, phenethyl acetate, linalool, citronellol and beta-damascenone were dissolved in 5 mL of purified water.

In addition, as the standard sample 2 of organic components, each of 25 ng of 2-acetylthiazole, 2-acetylpyrrole, guaiacol, phenethyl alcohol, 1-hexanol, cis-3-hexenol, benzyl alcohol and indole were dissolved in 5 mL of purified water.

In addition, commercially available roasted green tea, whiskey and beer, as well as coffee extracted from commercially available coffee beans with an espresso machine were used as a sample of organic components.

### <Organic Component Extraction Element>

As elements for extracting organic components, the ferromagnetic material shown in FIGs. 1 and 2 covered with glass and one part of the glass covered with polydimethylsiloxane "TWISTER-011333-001-00 (volume of polydimethylsiloxane: 63 µL) "or "TWISTER - 011222 - 001 - 00 (volume of polydimethylsiloxane: 24 µL) "(manufactured by Gelstel, Mülheim, Germany) was used and immersed for 30 minutes to obtain organic component extraction elements.

### <Extraction element for comparison>

As the extraction element for comparison, "TWISTER - 011333 - 001 - 00" or "TWISTER - 011222 - 001 - 00" was used without treatment with a solvent.

### <Equipment>

A multi-position stirrer (04- 80013-009, manufactured by Gelstel GmbH & Co. KG) was used for agitating the organic component extraction element. For the introduction of the organic components in the extracting element into the GC-MS, a thermal desorption apparatus TDU system (015750-090, manufactured by Gelster Co.) was used. For GC-MS, quadrupole type GC-MS (G3440A / G3172A, manufactured by Agilent) was used.

### <Analytical condition>

In the case of thermal desorption, introduction to GC-MS was carried out at 180°C using helium (50 mL / min) as a carrier gas. In the case of solvent desorption (back extraction), back extraction was carried out with 500 µL of acetone for 30 minutes, and 100 µL of back extraction solution was injected. DB-Wax (manufactured by Agilent Co.) was used as a GC column, after holding at an initial temperature of 40 °C for 3 minutes, the temperature was raised to 240 ° C at 10° C/min, held for 10 minutes, scanning measurement of 29-300 was performed as mass range (m / z).

### (Example 1 and Comparative Example 1)

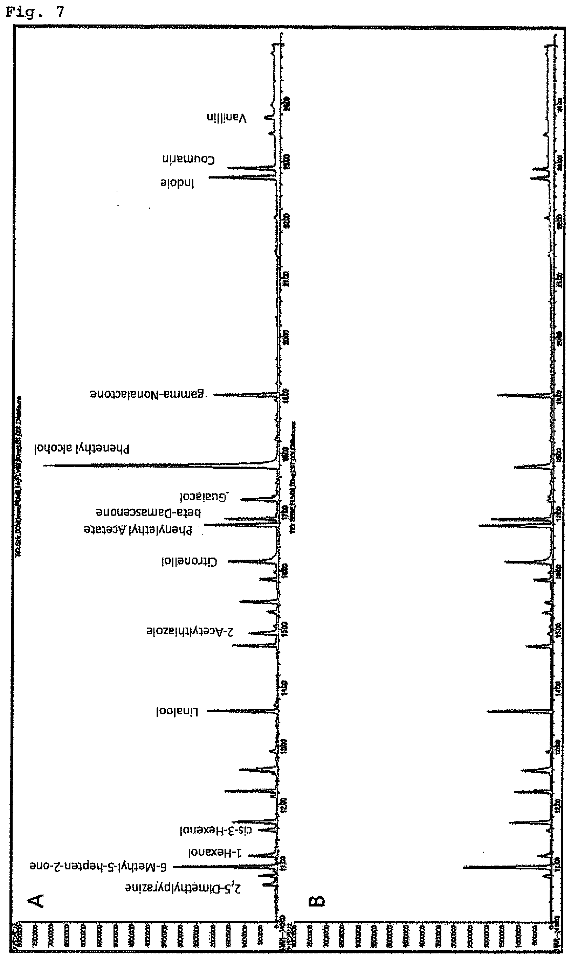

"TWISTER - 011333 - 001 - 00" swelled with dichloromethane in the standard sample 1 was charged as an element for organic component extraction and stirred with a magnetic stirrer at 800 rpm for 60 minutes. The weight ratio of polydimethylsiloxane to dichloromethane at this time was 1: 3, and the volume increase rate of polydimethylsiloxane was 280%. After that, the organic component extracting element was taken out with tweezers, put in a thermal desorption apparatus, and analyzed by GC-MS. The results are shown in Fig. 7. The one indicated by "A" in the upper stage in FIG. 7 is based on the analytical method according to the present invention, and the one indicated by "B" in the lower stage is the result of using the comparative element.

As can be seen from FIG. 7, according to the present invention, it is possible to analyze trace amount of organic components with high sensitivity.

### (Example 2 and Comparative Example 2)

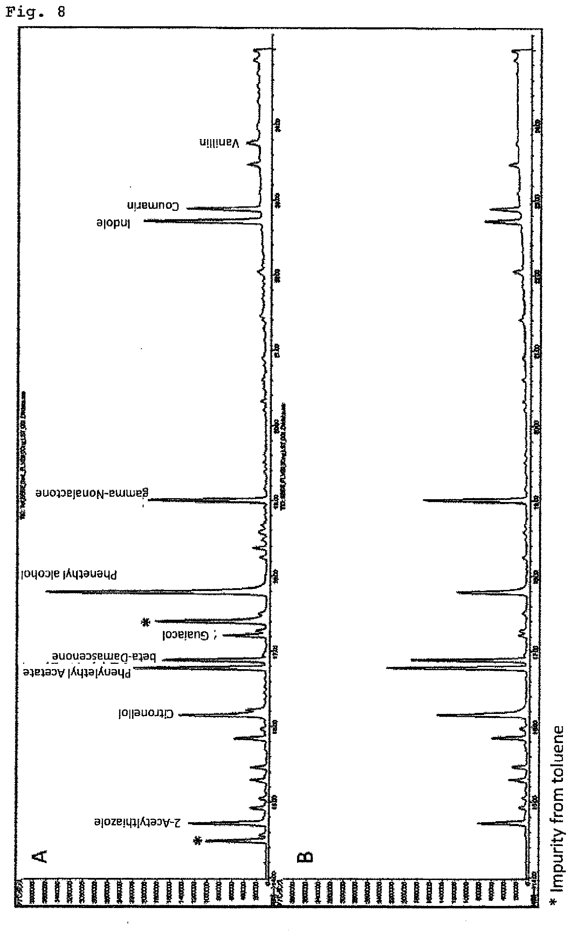

"TWISTER-011333-001-00" swelled with toluene in standard sample 1 was charged as an organic component extraction element and stirred with a magnetic stirrer at 800 rpm for 60 minutes. The weight ratio of polydimethylsiloxane to toluene at this time was 1: 1.3, and the volume increase rate of polydimethylsiloxane was 210%. After that, the organic component extracting element was taken out with tweezers, put in a thermal desorption apparatus, and analyzed by GC-MS. The results are shown in FIG. 8. The one indicated "A" in the upper stage in FIG. 8 is based on the analytical method according to the present invention, and the one indicated by "B" in the lower stage is the result of using the comparative element.

From FIG. 8, it is understood that according to the present invention, it is possible to analyze trace amount of organic components with high sensitivity.

### (Example 3 and Comparative Example 3)

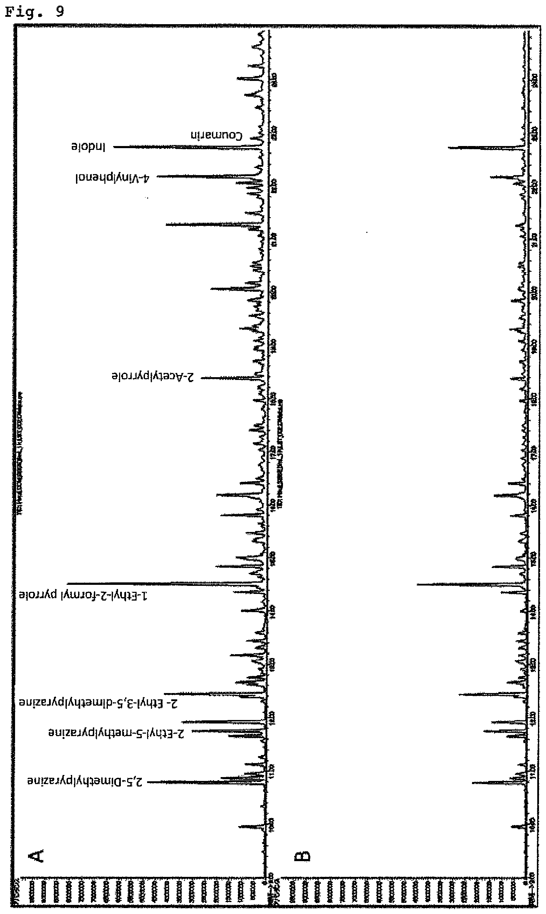

"TWISTER - 011333 - 001 - 00" swelled with dichloromethane as an element for organic component extraction was charged in 5 mL of commercially available roasted green tea and stirred with a magnetic stirrer at 800 rpm for 60 minutes. The weight ratio of polydimethylsiloxane to dichloromethane at this time was 1: 1.3, and the volume increase rate of polydimethylsiloxane was 280%. After that, the organic component extraction element was taken out with tweezers, put in a thermal desorption apparatus, and analyzed by GC-MS. The results are shown in Fig. 9. The one indicated by "A" in the upper stage of FIG. 9 is the analytical method according to the present invention and the one indicated by "B" in the lower stage is the result of using the comparative element.

From FIG. 9, it is understood that according to the present invention, it is possible to analyze trace amount of organic components with high sensitivity.

### (Example 4 and Comparative Example 4)

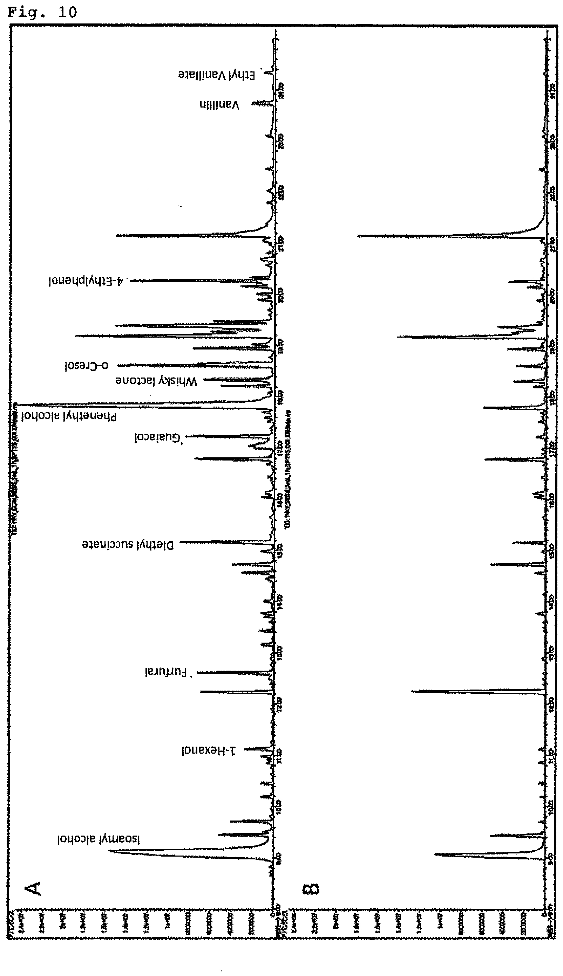

Organic components were analyzed in the same manner as in Example 3 and Comparative Example 3 except that commercially available whiskey was used. The results are shown in Fig. 10. The one indicated by "A" in the upper stage of FIG. 10 is based on the analytical method according to the present invention and the one indicated by "B" in the lower stage is the result of using the comparative element.

From FIG. 10, it is understood that according to the present invention, it is possible to analyze trace amount of organic components with high sensitivity.

### (Examples 5 to 7 and Comparative Example 5)

"TWISTER-011222-001-00 (volume of polydimethylsiloxane: 24 µL)" swelled with dichloromethane, diisopropyl ether or cyclohexane, respectively, as organic component extracting elements, were charged to 5 mL of commercially available beer ,and stirred at 800 rpm for 60 minutes with magnetic stirrer. The weight ratio of polydimethylsiloxane to dichloromethane, diisopropyl ether and cyclohexane at this time were 1: 1.2, 1: 0.86 and 1: 0.93, respectively, and the volume increase rate of polydimethylsiloxane were 280%, 170% and 180%, respectively. Thereafter, the organic component extracting elements were taken out with tweezers, and back extraction were carried out for 30 minutes using 500 µL of acetone as a solvent for back extraction. 100 µL of the obtained back-extract solution were injected into GC-MS for analysis (Examples 5 to 7).

Further, for the case of using "TWISTER - 011222 - 001 - 00" not swelled with a solvent, analysis for comparison was conducted (Comparative Example 5).

Here, the peak intensities of the respective organic components obtained in Examples 5 to 7 are normalized with the peak intensity obtained in Comparative Example 5, and the relative intensities of the organic components are compared. The obtained analysis results are shown in Table 1.

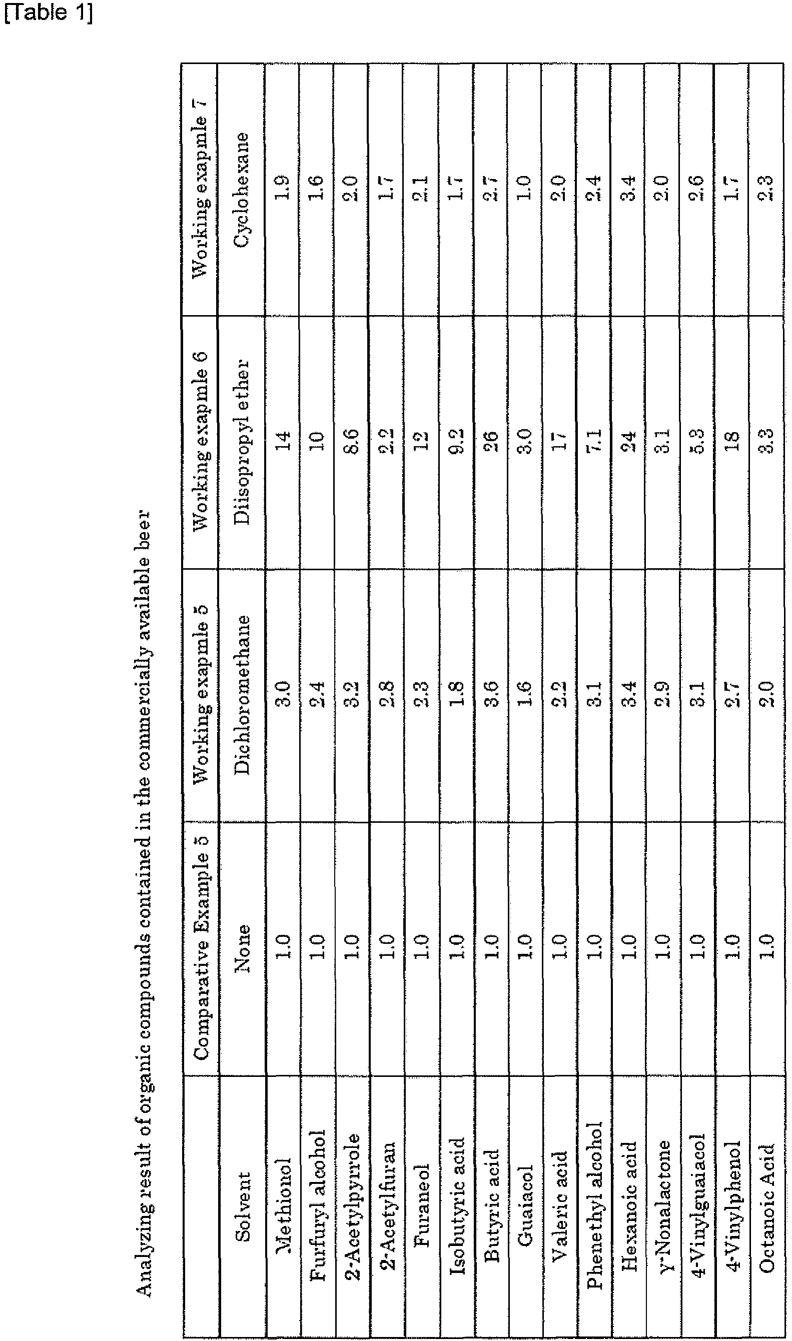

Thus, it is understood that organic components can be analyzed with high sensitivity by using the organic component extracting element of the present invention.

### (Examples 8 to 10 and Comparative Example 6)

Analysis was carried out under the same conditions as in Example 5 except that TWISTER was replaced with "TWISTER - 011333 - 001 - 00 (volume of polydimethylsiloxane: 63 µL)". The weight ratio of polydimethylsiloxane to dichloromethane, diisopropyl ether and cyclohexane at this time were 1: 1.3, 1: 1 and 1: 0.9, respectively, and the volume increase rate of polydimethylsiloxane were 280%, 200%, and 200%, respectively.

Here, the peak intensities of the respective organic components obtained in Examples 8 to 10 were normalized by the peak intensity obtained in Comparative Example 6, and the relative intensities of the organic components were compared. The obtained analysis results are shown in Table 2.

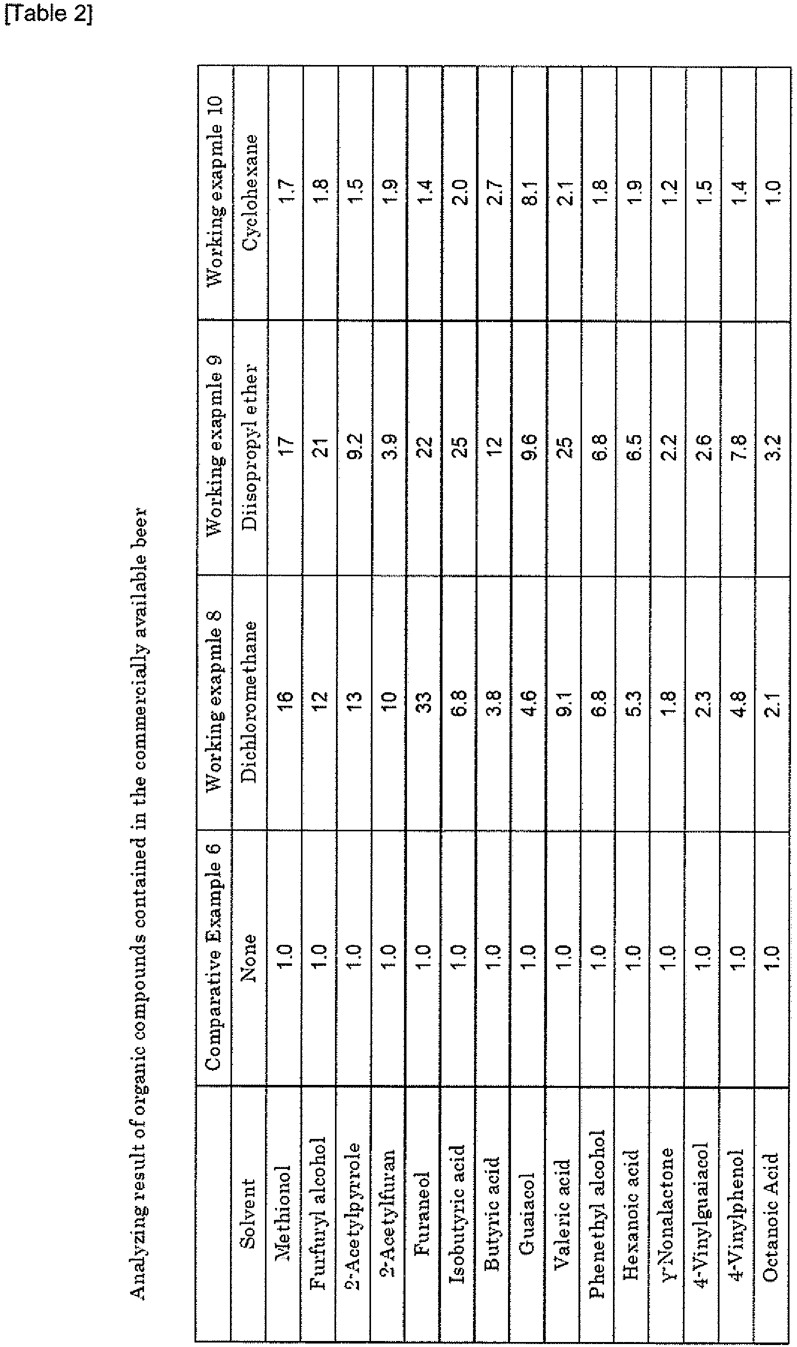

Thus, it is understood that organic components can be analyzed with high sensitivity by using the organic component extracting element of the present invention.

Table 3 shows the water-octanol partition coefficients (log KOW) of the each organic component extracted in the above Examples 5 to 10.

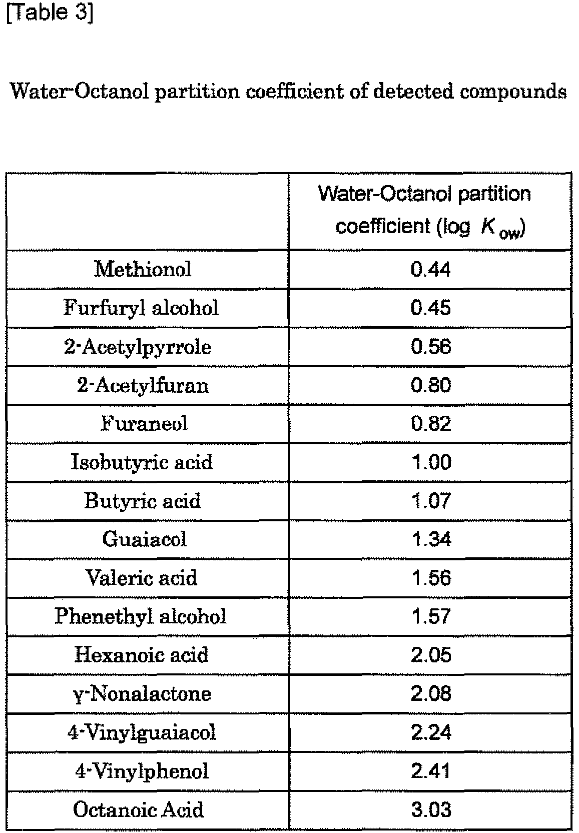

Thus, it is understood that organic components having various water-octanol partition coefficients can be extracted by using the organic component extracting element of the present invention.

### (Example 11 and Comparative Examples 7 to 12)

"TWISTER-011333-001-00" swelled with diethyl ether, tetrahydrofuran, ethyl acetate, methyl acetate, acetonitrile, and acetone was charged in standard sample 2 as an element for organic component extraction, and stirred with magnetic stirrer at 800 rpm for 60 minutes. At this time, the weight ratio of polydimethylsiloxane to diethyl ether, tetrahydrofuran, ethyl acetate, methyl acetate, acetonitrile, and acetone were 1: 1, 1: 1.2, 1: 0.78, 1: 0. 43, 1: 0.23 and 1: 0.24, respectively, and the volume increase rates of polydimethylsiloxane were 200%, 240%, 200%, 150%, 120% and 120%, respectively. After that, the organic component extracting element was taken out with tweezers, put in a thermal desorption apparatus, and analyzed by GC-MS.

Further, for the case of using "TWISTER-011333-001-00" not swelled with a solvent, analysis for comparison was conducted (Comparative Example 7).

Here, the peak intensities of each organic component obtained in Example 11 and Comparative Examples 8 to 12 were normalized with the peak intensities obtained in Comparative Example 7, and the relative strengths of the organic components were compared. The obtained analysis results were shown in Table 4.

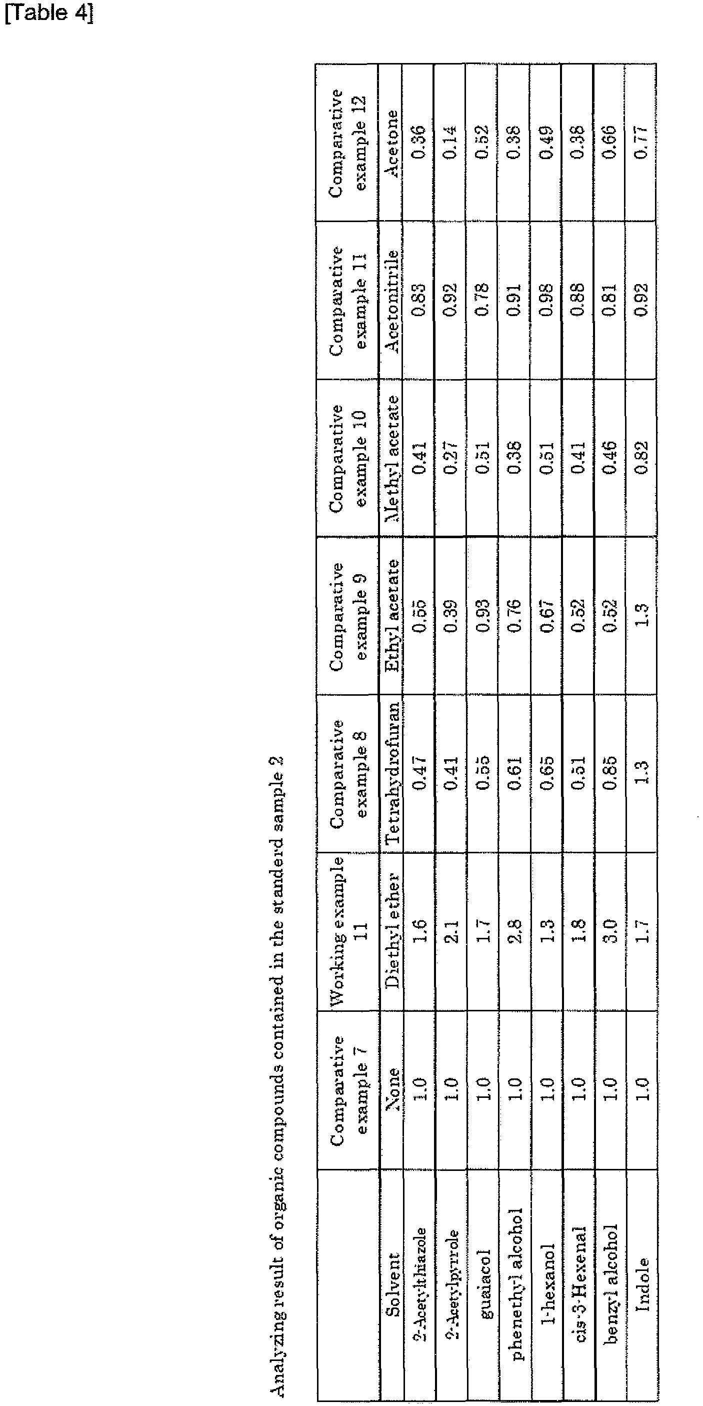

When swelled with diethyl ether, improvement in sensitivity was observed in all components, and their relative strength were 1.3 to 3.0 times. On the other hand, when tetrahydrofuran or ethyl acetate was swelled, the sensitivity was improved by 1.3 times of relative intensity only in indole, but the relative intensities of other components decreased by 0.39 to 0.93. Furthermore, when swelled with methyl acetate, acetonitrile, and acetone, the sensitivity of all components decreased and the relative intensities were 0.14 - 0.98

### (Example 12 and Comparative Example 13)

"TWISTER - 011333 - 001 - 00 (volume of polydimethylsiloxane: 63 µL)" swelled with methyl tert-butyl ether was charged into 5 mL of coffee extracted with an espresso machine as an element for organic components extraction, and stirred at 800 rpm for 60 minutes with a magnetic stirrer. The weight ratio of polydimethylsiloxane to methyl tert-butyl ether at this time was 1: 0.86, and the volume increase rate of polydimethylsiloxane was 170%. Thereafter, the organic component extraction element was taken out with tweezers, and back extraction was carried out for 30 minutes using 500 µL of acetone as a solvent for back extraction. 100 µL of the obtained back-extract solution was injected into GC-MS for analysis.

Further, for the case of using "TWISTER-011333-001-00" not swelled with a solvent, analysis for comparison was made (comparative example).

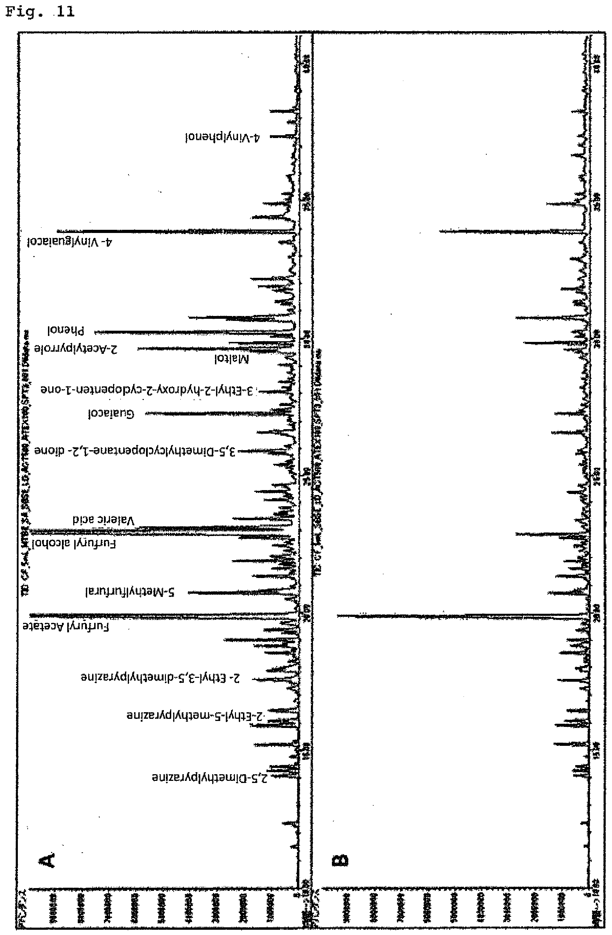

The results were shown in FIG. 11. The one indicated by "A" in the upper stage in FIG. 11 is based on the analytical method according to the present invention, and the one indicated by "B" in the lower stage is the result of using the comparative element.

From FIG. 11, it is understood that according to the present invention, it is possible to analyze trace amount of organic components with high sensitivity.

Here, the peak intensities of each organic component obtained in Example 12 were normalized with the peak intensities obtained in Comparative Example 13, and the relative strengths of the organic components were compared. The obtained analysis results were shown in Table 5.

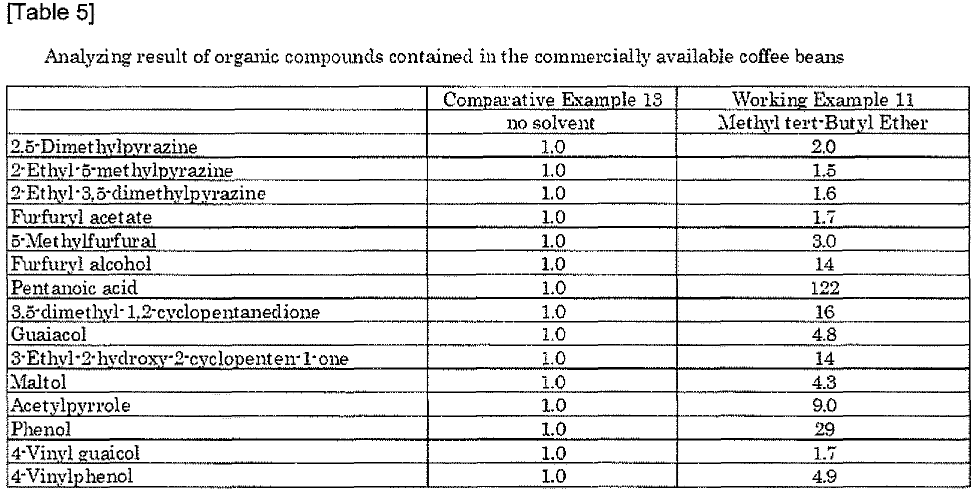

Thus, it is understood that organic components can be analyzed with high sensitivity by using the organic component extraction element of the present invention.

According to the present invention, method for extracting organic components having a hydrocarbon and using an element capable of extracting trace amount of organic components can be obtained. Also, using this element, trace organic components can be measured by GC, LC or the like.

Explanation of numbers of drawings
1 Ferromagnetic material
2 Glass and / or plastic
3 Polymer
10 Element for organic component extraction
20 Liquid
25 Gases
30 Motor
40 Stir bar
50 Container
55 Container
57 Lid
60 Sonicator
70 Water
80 Magnetic stirrer
90 Solid or liquid sample
100 Supporting equipment
110 Desorption apparatus
120 GC or LC
130 Detector

## Claims

1. A method for extracting organic components having a hydrocarbon, wherein the method comprises steps of:
(1) bringing an organic component extraction element into contact with liquid and / or gas containing organic components having a hydrocarbon to be extracted, wherein the organic component extracting element comprises at least one polymer selected from polyethyleneglycol, polyorganosiloxane, polyimide, polymethylvinylsilane and polyacrylate, preferably said polyorganosiloxane is polydimethylsiloxane,
wherein said polymer is swelled with at least one solvent selected from dichloromethane, chloroform, diethyl ether, ethyl propyl ether, diisopropyl ether, dipropyl ether, methyl tert-butyl ether, diethyl ketone, methyl propyl ketone, methyl isopropyl ketone, ethyl propyl ketone, methyl isobutyl ketone, pentane, isohexane, hexane, cyclohexane, heptane, isoheptane, isooctane, octane, carbon disulfide, diisopropylamine, trimethylamine, benzene, toluene and xylene,
(2) incorporating said organic components having a hydrocarbon into said element,
(3) taking out said element in which said organic components having a hydrocarbon were incorporated,
(4) separating said organic components having a hydrocarbon from said element.

2. The method according to claim 1, wherein said solvent comprises at least one selected from dichloromethane, diethyl ether, diisopropyl ether, methyl tert-butyl ether, methyl isobutyl ketone, cyclohexane, hexane and toluene.

3. The method according to claim 1 or 2, wherein a weight ratio of said polymer to said solvent is from 4: 1 to 1: 4, and / or a volume increase rate of said polymer after swell with said solvent to before swell with said solvent is 120 to 400%.

4. The method according to any one of claims 1 to 3, wherein at least one part of said element is ferromagnetic material.

5. The method according to claim 4, wherein at least one part of said ferromagnetic material is coated with glass and / or plastic and further coated with said polymer.

6. The method according to claim 5, wherein said plastic is fluorinated hydrocarbon polymer.

7. The method according to claim 6, wherein said fluorinated hydrocarbon polymer is polytetrafluoroethylene.

8. The method according to claim 7, further comprises a step of agitating and / or sonicating said liquid and / or said gas, in the step (2).

9. The method according to claim 7 or 8, wherein said organic components are separated from said element by using a heating desorption device, in the step (4).

10. The method according to any one of claims 7 to 9, wherein said organic components are separated from said element by using a solvent for back extraction, in the step (4).

11. The method according to claim 10, wherein said back extraction solvent comprises at least one selected from the group consisting of acetone, methyl ethyl ketone, acetonitrile, methanol, ethanol, propanol, methyl acetate, ethyl acetate and water.

12. A method for analyzing organic components having a hydrocarbon, wherein the method comprises performing the method for extracting organic components according to any one of claims 1 to 11.

## Patentansprüche

1. Verfahren zur Extraktion von organischen Komponenten, die einen Kohlenwasserstoff enthalten, wobei das Verfahren die folgenden Schritte umfasst:
(1) Kontaktieren eines Extraktionselements für organische Komponenten mit Flüssigkeit und/oder Gas, welche(s) zu extrahierende organische Komponenten mit einem Kohlenwasserstoff enthält/enthalten,
wobei das Extraktionselement für organische Komponenten mindestens ein Polymer umfasst, das aus Polyethylenglykol, Polyorganosiloxan, Polyimid, Polymethylvinylsilan und Polyacrylat ausgewählt ist,
wobei das genannte Polyorganosiloxan vorzugsweise Polydimethylsiloxan ist,
wobei das genannte Polymer mit mindestens einem Lösungsmittel gequollen wird, das aus Dichlormethan, Chloroform, Diethylether, Ethylpropylether, Diisopropylether, Dipropylether, Methyl-tert-butylether, Diethylketon, Methylpropylketon, Methylisopropylketon, Ethylpropylketon, Methylisobutylketon, Pentan, Isohexan, Hexan, Cyclohexan, Heptan, Isoheptan, Isooctan, Octan, Kohlenstoffdisulfid, Diisopropylamin, Trimethylamin, Benzol, Toluol und Xylol ausgewählt ist,
(2) Einbau der organischen Komponenten, die einen Kohlenwasserstoff enthalten, in das genannte Element,
(3) Entnahme des Elements, in welches die organischen Komponenten, die einen Kohlenwasserstoff enthalten, eingebaut wurden,
(4) Abtrennung der genannten organischen Komponenten, die einen Kohlenwasserstoff enthalten, von dem genannten Element.

2. Verfahren nach Anspruch 1, wobei das Lösungsmittel mindestens eines, ausgewählt aus Dichlormethan, Diethylether, Diisopropylether, Methyl-tert-butylether, Methylisobutylketon, Cyclohexan, Hexan und Toluol, umfasst.

3. Verfahren nach Anspruch 1 oder 2, wobei das Gewichtsverhältnis des Polymers zu dem Lösungsmittel 4:1 bis 1:4 beträgt und/oder die Volumenzunahmerate des Polymers nach dem Quellen mit dem Lösungsmittel im Vergleich zu vor dem Quellen mit dem genannten Lösungsmittel 120 bis 400 % beträgt.

4. Verfahren nach einem der Ansprüche 1 bis 3, wobei mindestens ein Teil des Elements aus ferromagnetischem Material besteht.

5. Verfahren nach Anspruch 4, wobei mindestens ein Teil des ferromagnetischen Materials mit Glas und/oder Kunststoff beschichtet ist und zusätzlich mit dem Polymer beschichtet ist.

6. Verfahren nach Anspruch 5, wobei der Kunststoff ein fluoriertes Kohlenwasserstoffpolymer ist.

7. Verfahren nach Anspruch 6, wobei das fluorierte Kohlenwasserstoffpolymer Polytetrafluorethylen ist.

8. Verfahren nach Anspruch 7, welches in Schritt (2) zusätzlich einen Schritt des Rührens und/oder der Sonifikation der Flüssigkeit und/oder des Gases umfasst.

9. Verfahren nach Anspruch 7 oder 8, wobei die organischen Komponenten in Schritt (4) unter Verwendung einer Heizdesorptionsvorrichtung von dem Element getrennt werden.

10. Verfahren nach einem der Ansprüche 7 bis 9, wobei die organischen Komponenten in Schritt (4) durch die Verwendung eines Lösungsmittels für die Rückextraktion von dem Element abgetrennt werden.

11. Verfahren nach Anspruch 10, wobei das Rückextraktionslösungsmittel mindestens eines umfasst, das aus der Gruppe bestehend aus Aceton, Methylethylketon, Acetonitril, Methanol, Ethanol, Propanol, Methylacetat, Ethylacetat und Wasser ausgewählt ist.

12. Verfahren zur Analyse organischer Komponenten, die einen Kohlenwasserstoff enthalten, wobei das Verfahren die Durchführung des Verfahrens zur Extraktion von organischen Komponenten gemäß einem der Ansprüche 1 bis 11 umfasst.

## Revendications

1. Procédé d'extraction de composants organiques ayant un hydrocarbone, sachant que le procédé comprend les étapes de :
(1) mise en contact d'un élément d'extraction de composants organiques avec du liquide et/ou du gaz contenant des composants organiques ayant un hydrocarbone devant être extrait, sachant que l'élément d'extraction de composants organiques comprend au moins un polymère sélectionné parmi le polyéthylène glycol, le polyorganosiloxane, le polyimide, le polyméthylvinylsilane et le polyacrylate, de préférence ledit polyorganosiloxane est du polydiméthylsiloxane,
sachant que ledit polymère est gonflé avec au moins un solvant sélectionné parmi le dichlorométhane, le chloroforme, le diéthyléther, l'éthylpropyléther, le diisopropyléther, le dipropyléther, le méthyl tert-butyléther, la diéthylcétone, la méthylpropylcétone, la méthylisopropylcétone, l'éthylpropylcétone, la méthylisobutylcétone, le pentane, l'isohexane, l'hexane, le cyclohexane, l'heptane, l'isoheptane, l'isooctane, l'octane, le disulfure de carbone, la diisopropylamine, la triméthylamine, le benzène, le toluène et le xylène,
(2) incorporation desdits composants organiques ayant un hydrocarbone dans ledit élément,
(3) enlèvement dudit élément dans lequel lesdits composants organiques ayant un hydrocarbone ont été incorporés,
(4) séparation desdits composants organiques ayant un hydrocarbone dudit élément.

2. Le procédé selon la revendication 1, sachant que ledit solvant comprend au moins un élément sélectionné parmi le dichlorométhane, le diéthyléther, le diisopropyléther, le méthyl tert-butyléther, la méthylisobutylcétone, le cyclohexane, l'hexane et le toluène.

3. Le procédé selon la revendication 1 ou 2, sachant qu'un rapport de poids dudit polymère audit solvant est de 4:1 à 1:4, et/ou un taux d'augmentation de volume dudit polymère après gonflement avec ledit solvant à avant gonflement avec ledit solvant est de 120 à 400 %.

4. Le procédé selon l'une quelconque des revendications 1 à 3, sachant qu'au moins une partie dudit élément est du matériau ferromagnétique.

5. Le procédé selon la revendication 4, sachant qu'au moins une partie dudit matériau ferromagnétique est revêtue de verre et/ou de plastique et en outre revêtue dudit polymère.

6. Le procédé selon la revendication 5, sachant que ledit plastique est un polymère d'hydrocarbone fluoré.

7. Le procédé selon la revendication 6, sachant que ledit polymère d'hydrocarbone fluoré est du polytétrafluoroéthylène.

8. Le procédé selon la revendication 7, comprenant en outre une étape d'agitation et/ou d'ultrasonification dudit liquide et/ou dudit gaz, à l'étape (2).

9. Le procédé selon la revendication 7 ou 8, sachant que lesdits composants organiques sont séparés dudit élément moyennant un dispositif de désorption par chauffage, à l'étape (4) .

10. Le procédé selon l'une quelconque des revendications 7 à 9, sachant que lesdits composants organiques sont séparés dudit élément moyennant un solvant d'extraction inverse, à l'étape (4).

11. Le procédé selon la revendication 10, sachant que ledit solvant d'extraction inverse comprend au moins un élément sélectionné dans le groupe constitué par l'acétone, le méthyléthylcétone, l'acétonitrile, le méthanol, l'éthanol, le propanol, le méthylacétate, l'éthylacétate et l'eau.

12. Procédé d'analyse de composants organiques ayant un hydrocarbone, sachant que le procédé comprend l'exécution du procédé d'extraction de composants organiques selon l'une quelconque des revendications 1 à 11.
